# EUROPEAN PATENT APPLICATION

(11) **EP 2 199 958 A1**
(43) Date of publication of application: **23.06.2010**
(21) Application number: 08291214.8
(22) Date of filing: 18.12.2008
(51) Int. Cl.: G06Q 10/00, H04L 29/08, G06K 19/07

(54) **Service provisioning method, a related service provisioning system a related service provisioning server and a related event registration server**

(71) Applicant: Alcatel Lucent, 75008 Paris (FR)
(72) Inventor: Trappeniers, Lieven, 2200 Herentals (Noorderwijk) (BE); van Broeck, Sigurd, 2980 Zoersel (BE); Lou, Zhe, 2000 Antwerpen (BE); Lauwers, Thaïs, 1000 Brussels (BE); Godon, Marc Bruno Frieda, 1840 Londerzeel (BE); Criel, Johan Georges Prosper, 9000 Gent (BE); Claeys, Laurence Annie Hugo Marie, 9000 Gent (BE)
(74) Representative: Narmon, Gisèle Marie Thérèse

(57) **Abstract**

The present invention relates to a method for Service provisioning in a communications system that comprises a plurality of communications devices, each including a tag reader for reading a tag-identifier from a tag attached to an object and for forwarding this tag-identifier to a service provisioning server. This service provisioning server is coupled to the communications devices over a communications network and the tag having a unique tag-identification. The service provisioning method further includes the steps of forwarding by a communications device of the plurality of communications devices a trigger message including trigger-information at reading the tag-identification of the tag towards the service provisioning server. Subsequently, a service-description of a service based on the trigger-information associated with the service stored in a service-list is determined followed by the executing of the service determined by the service provisioning server based on the retrieved service description.

## Description

The present invention relates to a Service provisioning method according to the preamble of claim 1 and a related system for service provisioning according to the preamble of claim 4.

Such a method and related system for resolving a service to be provisioned to a terminal device is already well known in the art.

The touching and subsequent reading of an auto-identification, such as an RFID tag-identification results in a fixed service, i.e. always the same service is provisioned.

This is due to the fact that the current state of the art technologies allow only a single and fixed association between the auto-identification, such as an RFID tag-identification and a service such as delivery or provisioning of digital content like documents, movies, presentation, photos etc. The resolution of the association can be located in the tag itself or in the network. As an example: an RFID tag put on a bottle of coke is associated with a picture. When touching the tag you will always see the same picture or movie, say the cola commercial of brand Y.

Further there already exist applications where certain specific, static context topics are used to enrich the RFID tag - information association. E.g. for payment not only the RFID identifier (pointing to the object to buy) is sent together with the reference of the bank account is sent to a payment server. The sent context information is however a static.

As a consequence, nowadays it is not possible to personalize the service provisioning towards a terminal device in a system where the service provisioning is based on an auto-identification associated to an object.

An object of the present invention is to provide a method, system and related devices of the above known type but wherein it is possible to better personalize the service that is related to a certain unique tag-identification.

According to the invention, this object is achieved by the method described in claim 1, the system as described in claim 4 and the service provisioning server as described in claim 5.

Indeed due to the fact that at reading the tag-identification of a tag, by a communications device of the plurality of communications devices, the communication device forwarding a trigger message including trigger-information towards the service provisioning server that subsequently determines a service-description of a service based on the trigger-information associated with the service stored in a list and the service provisioning server executing this service, where the service to be executed is defined in the service description stored in the list. The service can be a personalized service by means of a service description that is dedicated to a person in a specific situation.

Another characteristic feature of the present invention is described in claim 2 and claim 6.

In addition, the service provisioning method and related system may include the setting up of the service, i.e. the setup of a personalized service, by at first reading a tag attached to some object, by means of a first communications device of the plurality of communications devices, and subsequently providing a service-description of a service for associating with this tag read together with the tag-identification of the tag read and subsequently storing the trigger-information associated with the service and the corresponding service description in the service list. The providing of the service-description of a service for associating with this tag can be done by the user providing a text, the user selecting a service-description from a list, by the user selecting a service template and configuring it. Alternatively, the user can store the tag-identification of the tag read and at a later stage associate a service to the tag read,

The trigger- information at least includes one of the tag-identification of the tag read and communications device identification from a triggering list where this communications device is a device meant to trigger the execution of a personalized service defined in the service list. This trigger information may be derived from a tag reading message generated by the communications device after reading the tag, or alternatively provided by the user of the first device setting up the service.

The service description associated to the service to be provided may include a description of the service, i.e. the type of service, the service name, the URI of the service, a URI specifying the service endpoint, a reference to an API, a service script, the location of a service script, and in addition the destination for providing the service to, which may be any communications device, specified by, for example an IP address, a user name, an URI, a telephone number, etc.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a functional representation of a service provisioning method and related devices according to the present invention.
Fig. 2 displays the flow of actions in the first embodiment.

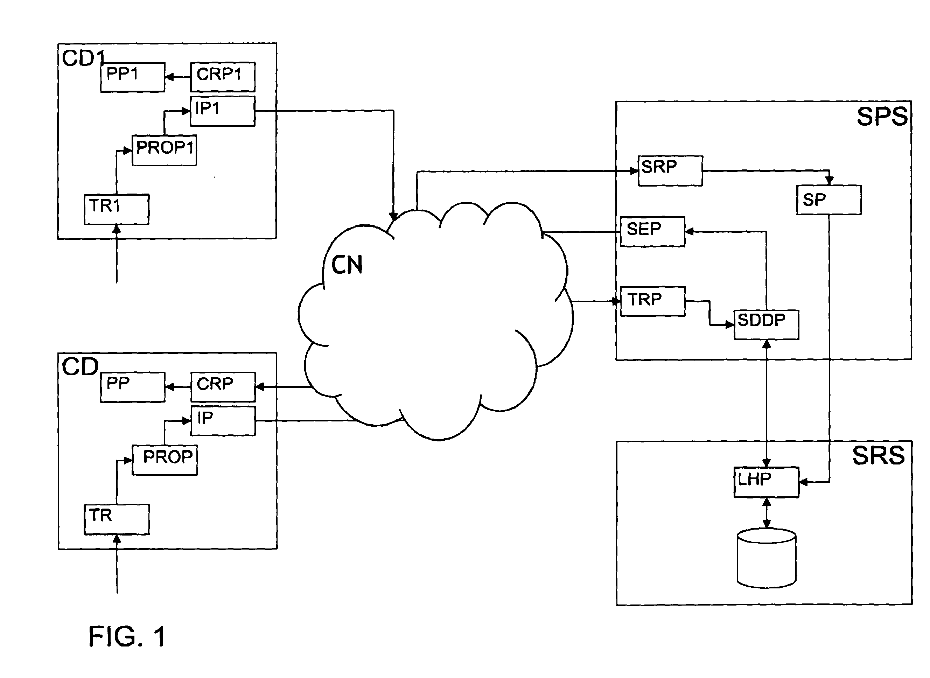

In the following paragraphs, referring to the drawing in FIG.1, an implementation of service provisioning method and related devices is described.

In the first paragraph of this description the main elements of this service provisioning system as presented in FIG. 1 are described. In the second paragraph, all connections between mentioned elements are defined.

Subsequently all relevant functional means of the mentioned system as presented in FIG.1 are described followed by a description of all interconnections. In the succeeding paragraph the actual execution of the service provisioning according to the method of the present invention is described.

The first relevant element of the present invention are the communications devices CD, CD1, CD2, CDx each including respective tag reader TR..TR2 for reading a tag-identifier from a tag attached to an object and for forwarding said tag-identifier to a service provisioning server. For reasons of simplicity not all communication devices are shown in FIG. 1.

Such a tag may be an RFID-code, a bar code (one or two dimensional). In addition, the object-information could also be determined by the shape or the visual appearance of the object, in which case the object-information can be obtained by applying image recognition means. Based on the recognition of the object a service to be provisioned where the service is again related to the object, can be selected from the predefined set of services related to the object.

Further there is a Service Provisioning Server SPS that is able to determine a service to be provided and subsequently to provide this determined service.

Additionally there may be Service Registration Server SRS that deals with registration of services to be provided, including description of the service to be provided with additional and associated trigger-information being information required for determining a service to be provided and subsequently provide with this service.

Each of the communication devices CD, CD1..CDx are coupled to the Service Provisioning Server SPS over any for the application suitable communications network, for example being GSM mobile network possibly having GPRS capabilities or a fixed communications network.. In other embodiments any other combination of fixed, mobile and internet networking infrastructure might be used to couple the browsing device BD and the Service provisioning sever SPS.

The Service Provisioning Server SPS may be coupled to the Service Registration Server over any for the application suitable communication link like fixed or wireless IP, messaging, API, Web-services, database connectors, etc.

The communications device CD comprises a tag retrieving part TR that is adapted to retrieve the tag-identifier associated to the interrogated object during an interaction with the object, a processing part PROP that is adapted to generate a message including at least the tag-identifier read destined to the service provisioning server SPS and an interfacing part IP that is adapted to forward a trigger message including trigger-information at reading the tag-identification of the tag towards the service provisioning server SPS. The trigger message in addition may also include the identification of the communications device having read the tag. In the reading of the tag, a NFC-code, RFID-tag, the barcode etc is obtained

The Service provisioning server SPS comprises a trigger receiving part TRP for receiving from a communications device CD2 of a plurality of communications devices CD, CD1, CD2, CDx a trigger message including trigger-information forwarded at reading the tag-identification of said tag and a service-description determining part SDDP that is able to determine a service-description of a service based on the trigger-information associated with a service stored in a list. Further the Service provisioning server SPS does contain a service execution part SEP that is adapted to execute the service, based on the retrieved service description.

In addition the Service provisioning server SPS may contain for the set-up of the services a service description retrieval part SRP that is able to retrieve a service description of a service from a first communications device at reading a tag by the first communications device CD1 of the plurality of communications devices CD, CD1, CD2, CDx for storing in the list together with at least one of said tag-identification read and a communications device identification reading the tag-identification.

Secondly for the Service provisioning server SPS contains a storing part SP, adapted to store trigger-information associated with the service (including the tag-identification of said tag read) together with said service description in the list.

Finally the Service provisioning server SPS may contain a list holding part LHP for storing the list.

Alternatively, a service registration server SRS, may contain a list holding part LHP' for holding the list for storing service-description of a service based on said trigger-information associated with the service stored in a list. The list holding part may be coupled to a database for storing all service data.

The communications device CD, has a first input-terminal that is at the same time an input-terminal of the tag retrieving part TR that is further coupled to processing part PROP. The processing part PROP further is coupled to the interfacing part IP that has an output-terminal that is at the same time an output-terminal of the Communications device CD. This output-terminal further is coupled to the communications network CN.

The structure of the other communications devices CD1..CD3 is equal to that of the communications device CD.

The Service provisioning server SPS has a first input-terminal that is at the same time an input-terminal of the trigger receiving part TRP. The trigger receiving part TRP further is coupled to the service-description determining part SDDP that in turn is coupled to the service execution part SEP. The service execution part SEP has an output-terminal that is at the same time an output-terminal of the Service provisioning server SPS. The service-description determining part SDDP further is coupled to list holding part LHP over an internal coupling. In the alternative situation where the list holding part LHP is incorporated in a service registration server the service-description determining part SDDP is coupled to the list holding part LHP over an external connection like fixed or wireless IP, a messaging interface, an API, Web-services, database connectors, etc. The list holding part LHP further may be coupled to database.

Furthermore, the Service provisioning server has a further input-terminal that is at the same time an input-terminal of the service description retrieval part SRP that is coupled to the storing part SP that in turn is coupled to the list holding part LHP over an internal or external coupling depending on the implementation.

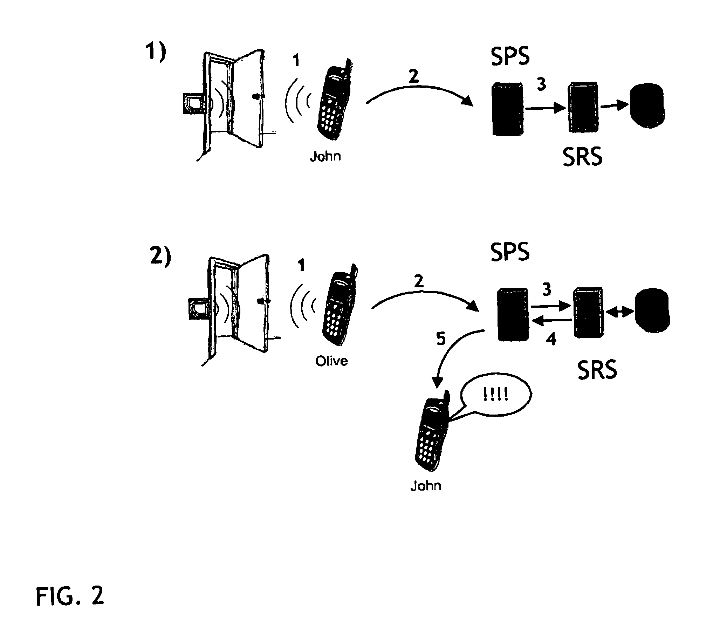

In order to explain the operation of the present invention, initially, especially the service setup phase it is assumed that John visits the Musée d'Orsay. He intends to setup the "tell me when a friend visits the Musée d'Orsay" service. In particular he wants to be notified if his best friend Olive visits this museum. Therefore, when leaving the museum, (1) (See Fig.2) he touches a sign at the entrance with his mobile phone and at that instance the tag-identification of the sign is read by means of the tag retrieving part TR1 of communications device CD1, being John's phone. The processing part PROP then generates a service setup message that includes the tag-identifier read being the tag-identifier of the sign at the entrance of the Musée d'Orsay which message is destined to the service provisioning server SPS. The interfacing part IP1 of the communications device CD1 forwards the generated service setup-message including service setup-information at reading the tag-identification of the tag towards the service provisioning server SPS. The message in addition may also include the identification of the communications device at reading the tag for which the service is to be triggered here being the identification, e.g. the mobile phone-number, of Olive's phone.

The service description retrieval part SRP of the service provisioning server SPS, then retrieves the service description included in the service setup message of a service from a first communications device, being the mobile phone of John, for storing in the list together with the tag-identification read, being the tag-identifier of the sign at the entrance of the Musée d'Orsay and a communications device identification reading the tag of the tag-identification read that is also a service triggering criterion. The communication device identification meant is the identification of the mobile device of Olive.

The storing part SP stores the trigger-information associated with the "tell me when a friend visits the Musée d'Orsay" service together with the service description in the service list.

The service list may be maintained by a list holding part LHP in the service provisioning server or alternatively in a service registration server SRS. The list holding part may be coupled to a database for storing all service data.

In order to explain the further operation of the present invention, especially the service setup phase it is assumed that a person, OLIVE visits the Musée d'Orsay. She pays her ticket by (FIG. 2 (2) 1) touching a sign at the entrance and at that instance the tag-identification of the sign is read by means of the tag retrieving part TR1 of communications device CD, being Olive's phone. The processing apart then generates a trigger-message that includes the tag-identifier read being the tag-identifier of the sign at the entrance of the Musée d'Orsay which message is destined to the service provisioning server SPS. The interfacing part IP of the communications device CD1 forwards the generated trigger-message including trigger-information at reading the tag-identification of the tag towards the service provisioning server SPS. The trigger message in addition also includes the identification of the communications device having read the tag being the identification of Olive's phone.

The trigger receiving part TRP of the Service provisioning server SPS receives from a communications device CD1 the trigger message including trigger-information forwarded at reading the tag-identification of the tag attached to the sign at the entrance of the Musée d'Orsay. The trigger-information in this message includes tag-identification of the tag the attached to the sign at the entrance of the Musée d'Orsay and the identification of the communications device having read the tag being the identification of Olive's phone.

The service-description determining part SDDP then determines a service-description of a service based on the trigger-information associated with a service stored in a list. In practice this means that the service description determining part SDDP looks for an entry in a list containing the items of the trigger-information and based thereon determine the associated service, in this embodiment the trigger-information being the Tag id of the tag attached to the sign at the entrance of the Musée d'Orsay and the identification of Olive's phone, e.g. the mobile phone number and the service being the "tell me when a friend visits the Musée d'Orsay" service. Further the entry of the list contains the service description indicating amongst others the type of service here being the "tell me when a friend visits the Musée d'Orsay" service and a list of friends where the friend are identified by their mobile phone numbers. In this entry the phone-number of John is found.

Hence at detection of the tag-identification of the tag attached to the sign at the entrance of the Musée d'Orsay and the identification of the communications device having read the tag, here being the identification of Olive's phone, the service-description determining part SDDP finds in the list the "the tell me when a friend visits the Musée d'Orsay" service and in the corresponding service description the service parameters and the destination of the service, The destination of the service here is John, and the mobile phone-number of John is stored in the list as destination of the service.

Subsequently the service execution part SEP executes the service, based on the retrieved service description The service execution part SEP the start setting up a phone connection between the mobile phone of Olive and the mobile phone of JOHN so that John can tell Olive the most interesting parts and the items Olive must see in the museum.

The list may be maintained by a list holding part LHP in the service provisioning server or alternatively in a service registration server SRS. The list holding part may be coupled to a database for storing all service data.

It is to be noted that multiple Service Provisioning Servers interface with multiple service registration servers. An Object Naming Service infrastructure can be used for discovering/finding the proper service registration server.

For a second embodiment above, the embodiment would work as follows. Jack buys a smart birthday card for Nicole. He configures a server in the network such that Nicole gets a personalized movie on her phone when she touches the card (outside the scope of this invention). In addition, before sending the card, he **(1)** also touches the card with his mobile phone that subsequently **(2)** sends this event to the Service Provisioning Server SPS. While **(2)** interacting with the Service Provisioning Server SPS, Jack select the "Postcard notification service". As a result, **(3)** the Service Provisioning Server SPS instructs the service Registration Server SRS to register a rule that realizes the scenario when the proper event is detected: "alert Jack when this card is touched by someone". Each time when **(4)** Nicole (or someone else) touches the card to see the movie, **(5)** an event is sent to the Service Provisioning Server SPS that **(6)** forwards it to the proper Service Registration Server SRS that **(7)** instructs the Service Provisioning Server SPS to **(8)** notify Jack. Alternatively, the service Registration Server SRS could directly take the initiative to alert Jack without involving the Service Provisioning Server SPS.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Service provisioning method in a communications system comprising a plurality of communications devices (CD1, CD2, CD3) each including a tag reader (TR) for reading a tag-identifier from a tag attached to an object and for forwarding said tag-identifier to a service provisioning server (SPS), said service provisioning server being coupled to said communications device over a communications network, said tag having a unique tag-identification, **CHARACTERISED IN THAT** said service provisioning method further comprises the following steps of :
a2. forwarding, by a communications device (CD2) of said plurality of communications devices (CD1, CD2, CD3) a trigger message including trigger-information at reading the tag-identification of said tag, towards said service provisioning server (SPS); and
b. determining a service-description of a service based on said trigger-information associated with said service stored in a service-list.
c. executing said service, by said service provisioning server (SPS) based on said service description retrieved.

2. Service provisioning method according to claim 1, **CHARACTERISED IN THAT** said service provisioning method further comprises before said step a2, the step of:
a0. at reading a tag by a first communications device (CD1) of said plurality of communications devices (CD1, CD2, CD3) storing a service description of a service in said service-list together with at least one of said tag-identification read and a triggering communications device identification reading said tag; and
a1. storing trigger-information associated with said service together with said service description in said list.

3. Service provisioning method according to claim 1 or 2, **CHARACTERISED IN THAT** said trigger information includes at least one of a tag-identification of said tag read and a reader-identification uniquely identifying said tag-reader.

4. Service provisioning system, for provisioning a service in a communications system comprising a plurality of communications devices (CD, CD1, CD2, CD3) each including a tag reader (TR) for reading a tag-identifier from a tag attached to an object and for forwarding said tag-identifier to a service provisioning server (SPS), said service provisioning server (SPS) being coupled to said communications device over a communications network, said tag having a unique tag-identification, **CHARACTERISED IN THAT** said service provisioning system further comprises:
a. a communications device (CD1) of said plurality of communications devices (CD1, CD2, CD3), adapted to forward a trigger message including trigger-information at reading the tag-identification of said tag towards said service provisioning server (SPS); and
b. a device adapted to determine a service-description of a service based on said trigger-information associated with said service stored in a service-list.
c. a service provisioning server (SPS), adapted to execute said service based on said service description retrieved.

5. Service provisioning server (SPS), for use in a communications system comprising a plurality of communications devices (CD1, CD2, CD3) each including a tag reader (TR) for reading a tag-identifier from a tag attached to an object and for forwarding said tag-identifier to said service provisioning server (SPS), said service provisioning server (SPS) being coupled to said communications device over a communications network, said tag having a unique tag-identification, **CHARACTERISED IN THAT** said service provisioning server (SPS) comprises the following parts:
a. a trigger receiving part (TRP), adapted to receive from a communications device (CD2) of said plurality of communications devices (CD1, CD2, CD3) a trigger message including trigger-information forwarded at reading the tag-identification of said tag towards said service provisioning server (SPS); and
b. service-description determining part (SDDP), adapted to determine a service-description of a service based on said trigger-information associated with said service stored in a service-list.
c. service execution part (SEP), adapted to executing said service, based on said service description retrieved.

6. Service provisioning server (SPS) according to claim 5, **CHARACTERISED IN THAT** said service provisioning server (SPS) further comprises:
a. service description retrieval part (SRP), adapted to a retrieve a service description of a service from a first communications device at reading a tag by said first communications device (CD1) of said plurality of communications devices (CD1, CD2, CD3) for storing in said service-list together with at least one of said tag-identification read and a triggering communications device identification reading said tag-identification; and
a1. storing part (SP), adapted to storing trigger-information associated with said service (including said tag-identification of said tag read) together with said service description in said service-list.

7. Service provisioning server (SPS) according to claim 5 or 6, **CHARACTERISED IN THAT** said service provisioning server (SPS) contains a list holding part (LHP) for storing said service-list.

8. Service registration server (SRS), for use in a communications system comprising a plurality of communications devices (CD1, CD2, CD3) each including a tag reader (TR) for reading a tag-identifier from a tag attached to an object and for forwarding said tag-identifier to a service provisioning server (SPS), said service provisioning server (SPS) being coupled to said communications device over a communications network, said tag having a unique tag-identification, said service registration server (SRS) being coupled to said service provisioning server (SPS), further comprises a service-list holding part (LHP'), adapted to hold said list for storing service-description of a service based on said trigger-information associated with said service stored in a service-list.
